# DEMANDE DE BREVET EUROPEEN

(11) **EP 4 056 333 A1**
(43) Date de publication de la demande: **14.09.2022**
(21) Numéro de dépôt: 22161959.6
(22) Date de dépôt: 14.03.2022
(51) Int. Cl.: B25J 11/00, B25J 21/00

(54) **SYSTÈME DE DÉCOUPE DE PIÈCES MÉTALLIQUES**

(30) Priorité: 12.03.2021 FR 2102497
(71) Demandeur: Sab Robotique, 01090 Guereins (FR)
(72) Inventeur: LAMBERT, Eric, 69430 CHENELETTE (FR)
(74) Mandataire: LLR

(57) **Abrégé**

L'invention concerne un système de découpe (2) de pièces métalliques comprenant au moins une enceinte (4) comprenant au moins un robot de découpe (6) des pièces métalliques, l'enceinte (4) étant agencée pour permettre le fonctionnement et le transport du robot de découpe (6) à l'intérieur de l'enceinte (4).

## Description

L'invention concerne les dispositifs de découpe de pièces métalliques.

Il peut par exemple s'agir de masselottes. On entend par masselotte une petite masse agissant par inertie, par gravité ou par force centrifuge, généralement ajoutée à un organe en mouvement pour en assurer l'équilibrage. La masselotte peut être, par exemple en fonderie, est une petite masse de taille variable suivant la taille ou complexité de la pièce pour assurer la qualité de fabrication lors de la coulée

On connaît déjà dans l'état la technique des dispositifs de découpe de pièces métalliques à l'aide d'une scie standard, par exemple équipée d'un disque de tronçonnage tournant à une vitesse de 4 000 tours par minute. Les inconvénients de cette méthode résident dans les risques associés (risques de projection sur un opérateur lors de la découpe par exemple), dans l'impossibilité de réaliser plusieurs coupes ainsi que dans la relative lenteur du système de découpe. Ces dispositifs sont de plus difficilement déplaçables et longs à être mis en fonctionnement après déplacement sur un site.

Il existe également des solutions robotisées, potentiellement développées sur mesure pour un industriel. Ces solutions restent néanmoins difficiles à transporter et longues à être mises en fonctionnement après déplacement sur un site.

L'invention a notamment pour but de fournir un dispositif de découpe de pièces métalliques permettant de réaliser des découpes variées tout en étant facilement déplaçable et facilement mis en fonctionnement après déplacement.

A cet effet l'invention a pour objet un système de découpe de pièces métalliques comprenant au moins une enceinte comprenant au moins un robot de découpe des pièces métalliques, l'enceinte étant agencée pour permettre le fonctionnement et le transport du robot de découpe à l'intérieur de l'enceinte.

Ainsi, on utilise un robot de découpe permettant de réaliser plusieurs découpes et ce de manière rapide contrairement à l'utilisation d'un disque de tronçonnage mis en œuvre par un opérateur.

De plus, le placement du robot de manière récurrente dans une enceinte permet à ce dernier d'être déplacé facilement d'un site à un autre. L'enceinte peut par exemple être un conteneur standard, par exemple maritime, par exemple de 15 pieds.

Enfin, l'enceinte est équipée de tout le nécessaire permettant de mettre en fonctionnement le robot, ce qui assure également une mise en fonctionnement rapide de ce dernier.

Suivant d'autres caractéristiques optionnelles du système de découpe selon l'invention prises seules ou en combinaison :
- l'enceinte est un conteneur, de préférence de type maritime ;
- les pièces métalliques sont des masselottes ;
- Le robot de découpe est agencé pour réaliser des découpes ou de l'usinage selon au moins six axes de coupe. Le nombre de coupes possible est dès lors optimisé ;
- L'enceinte comprend des éléments de renfort de sa structure. Cela permet d'augmenter la répétabilité des découpes sans pour autant porter atteinte à l'intégrité de l'enceinte ;
- Le système comprend un dispositif de coupure du robot de découpe, le dispositif d'arrêt étant configuré pour arrêter le robot de découpe si la force exercée par ce dernier lors d'une découpe excède une valeur seuil. Cela permet de préserver le robot de découpe contre toute action trop importante pouvant entraîner sa dégradation ;
- L'enceinte comprend sur une face externe au moins un socle de fixation d'une armoire électrique. Cela facilite l'accessibilité au tableau électrique pour la maintenance (i.e. sans avoir à pénétrer à l'intérieur de l'enceinte) ;
- L'enceinte comprend sur une face externe au moins une platine d'accueil des systèmes hydraulique et/ou pneumatique du robot de découpe. Là encore, cela facilite l'accessibilité à ces différents systèmes pour la maintenance (i.e. sans avoir à pénétrer à l'intérieur de l'enceinte) ;
- L'enceinte comprend au moins une porte d'accès à l'intérieur du système, la porte d'accès comprenant des éléments de renfort de sa structure. Cela permet de pouvoir facilement accéder à l'intérieur de l'enceinte en cas de besoin (par exemple pour la maintenance du robot de découpe) tout en permettant la répétabilité des découpes sans endommager l'enceinte comme expliqué plus haut. Elle peut aussi permettre de sortir le robot pour changement de celui-ci si besoin ;
- L'enceinte comprend une porte d'accès d'origine du container sur le côté étant équipée de capteur de sécurité ;
- L'enceinte comprend des éléments d'isolation phonique de l'enceinte. Cela permet de répondre aux normes de sécurité en vigueur en termes de niveau sonore ;
- L'enceinte comprend au moins une fenêtre munie de moyens d'obstruction configurés pour laisser passer la lumière. La présence de fenêtre permet de garder une certaine visibilité sur la zone de travail tout en garantissant une certaine sécurité grâce à la présence de moyens d'obstruction permettant le passage de lumière ;
- L'enceinte comprend au moins un organe de raccordement du système de découpe à un moyen d'aspiration de gaz. Cela s'inscrit notamment dans le traitement des vapeurs de lubrification. Encore une fois, il s'agit ici de pouvoir mettre le robot de découpe en fonctionnement le plus rapidement possible ;
- Le système comprend un convoyeur attenant à l'enceinte et configuré pour séparer les pièces métalliques découpées des copeaux issus de la découpe. Cela permet une séparation rapide des pièces métalliques et des copeaux issus de la découpe ;
- L'enceinte comprend une table de découpe pivotante. Une telle table de découpe permet de réaliser, en plus des possibilités de découpes liées à la nature du robot de découpe, un nombre de découpes différentes encore plus important et est capable de pivoter rapidement; et
- laquelle la table de découpe comprend des éléments de centrage et de maintien des pièces à découper. Cela rend le procédé de découpe plus robuste.

### Brève description des figures

L'invention sera mieux comprise à la lecture de la description qui va suivre donnée uniquement à titre d'exemple et faite en se référant aux dessins annexés dans lesquels :

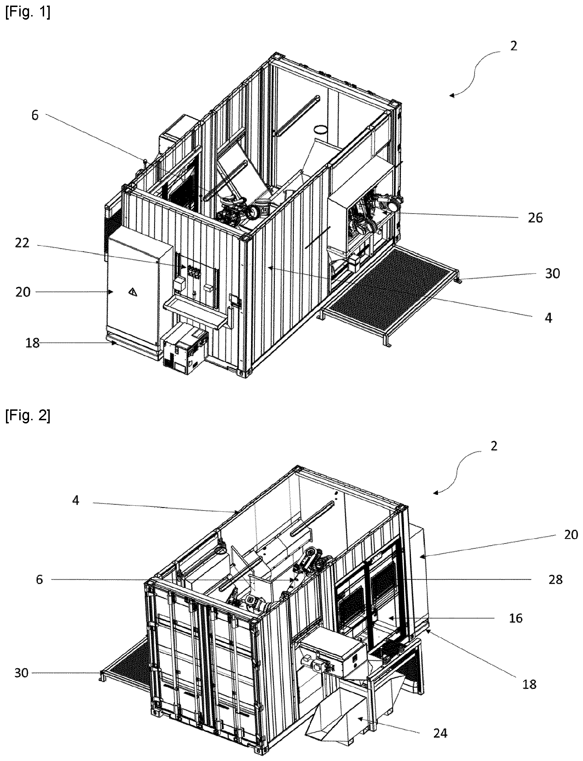

[Fig. 1] la figure 1 est une vue en perspective d'un système de découpe selon l'invention,
[Fig. 2] la figure 2 est une vue en perspective d'un système de découpe selon l'invention,

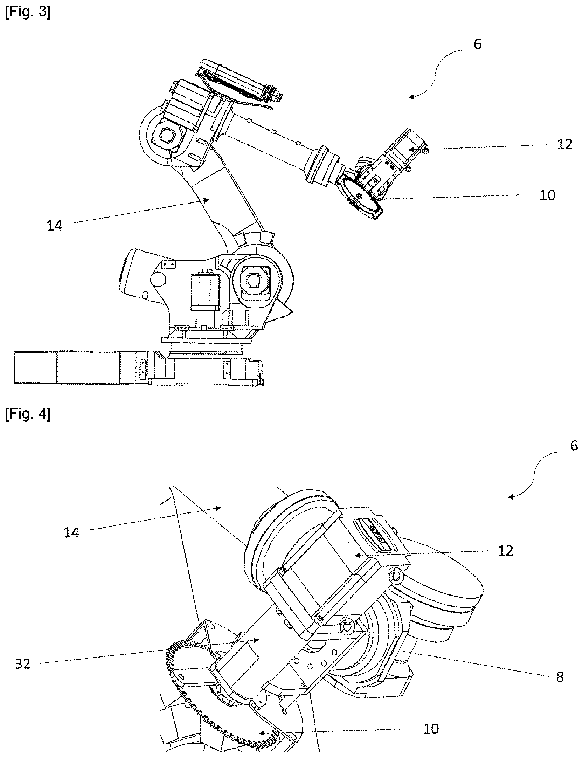

[Fig. 3] la figure 3 est une vue de côté d'un robot de découpe selon l'invention,
[Fig. 4] la figure 4 est une vue en perspective d'un bloc de sciage selon l'invention,

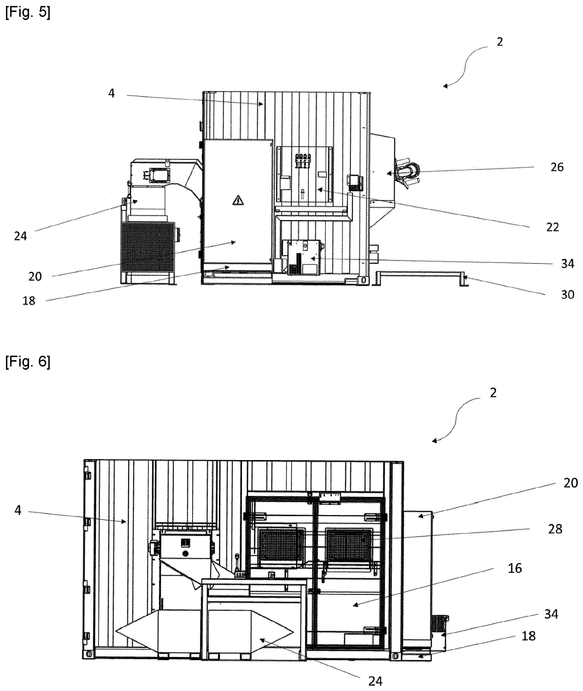

[Fig. 5] la figure 5 est une vue d'une première face d'une enceinte du système de découpe,
[Fig. 6] la figure 6 est une vue d'une seconde face d'une enceinte du système de découpe,

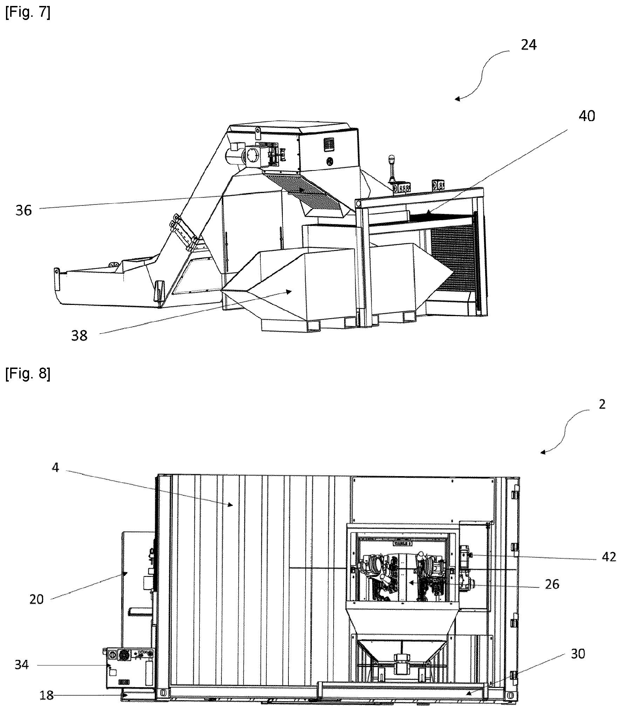

[Fig. 7] la figure 7 est une vue en perspective d'un convoyeur selon l'invention,
[Fig. 8] la figure 8 est une vue d'une troisième face d'une enceinte du système de découpe,

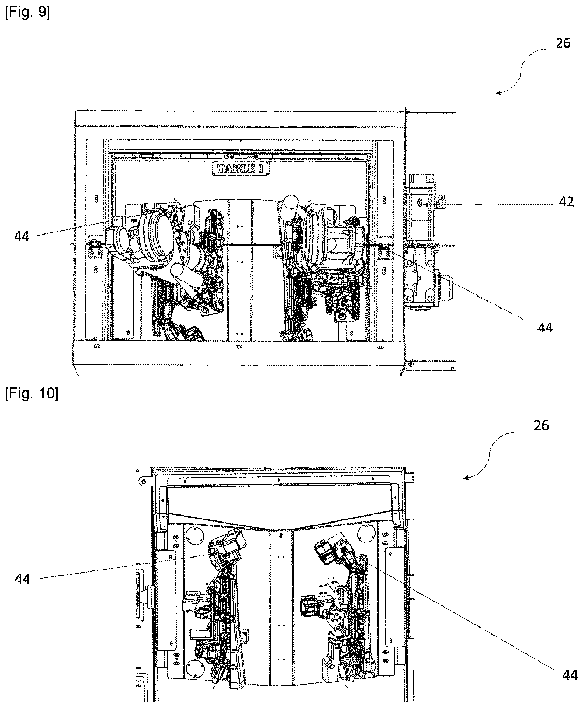

[Fig. 9] la figure 9 est une vue d'une première face d'une table de découpe selon l'invention, et
[Fig. 10] la figure 10 est une vue d'une seconde face d'une table de découpe selon l'invention.

### Description détaillée

On se réfère désormais aux figures illustrant un système de découpe 2 de pièces métalliques, par exemple de masselottes. Ces pièces métalliques peuvent par exemple être en aluminium.

Ce dernier comprend au moins une enceinte 4, par exemple un conteneur, par exemple de 15 pieds, si le choix de réalisation se porte sur une incorporation d'un système de découpe au sein d'un conteneur. Il peut donc s'agir d'une structure existante à aménager ou au contraire d'une structure conçue spécialement. L'avantage d'un conteneur standard modifié pour cet usage est de permettre un transport aisé du fait de l'existence de dimensions standardisées.

L'enceinte 4 comprend un robot de découpe 6 des pièces métalliques destiné à fonctionner à l'intérieur de l'enceinte 4. Cette dernière est donc agencée, comme expliqué ci-après, pour permettre le fonctionnement et le transport du robot de découpe 6 à l'intérieur de l'enceinte 4. En d'autres termes, le robot de découpe 6 est placé à l'intérieur de l'enceinte 4 de manière fixe et tout est prévu pour que ce dernier fonctionne à l'intérieur de l'enceinte. Du fait de son placement permanent dans l'enceinte 4, le transport du robot de découpe est très aisé, encore plus lorsque l'enceinte correspond à un conteneur ayant des dimensions standardisées.

Concernant le robot de découpe 6, ce dernier peut être agencé pour réaliser des découpes ou de l'usinage selon au moins six axes de coupe. On parle alors de robot six axes. Les bras de robot six axes sont connus de l'homme du métier et ne feront pas ici l'objet d'une description détaillée. Ce dernier peut être composé d'un bloc de sciage 8 composé d'une scie 10 et d'un moteur 12 et placé en bout de bras de robot six axes 14, de préférence selon un angle de 90° par rapport à la direction d'extension de l'extrémité du bras de robot 14. L'accouplement entre la scie et le moteur peut être réalisé par l'intermédiaire d'un axe monobloc 32 guidé par deux roulements s'étendant du moteur à la scie, l'accouplement étant réalisé par un anti vibreur placé au niveau de l'axe monobloc.

Concernant le choix du moteur, il peut par exemple s'agir d'un moteur sans balai ou « moteur brushless ». De part leur conception et la nature de leur fonctionnement, ce type de moteur garantit une vitesse constante, une puissance suffisante pour cette application et est compact. Il est possible d'envisager un dispositif de refroidissement interne du moteur ainsi qu'un variateur programmable.

Afin de protéger le robot contre un effort trop excessif qui pourrait conduire à une dégradation, le système de découpe 2 peut comprendre un dispositif de coupure du robot de découpe, le dispositif d'arrêt étant configuré pour arrêter le robot de découpe si la force exercée par ce dernier lors d'une découpe excède une valeur seuil.

Afin d'assurer la répétabilité des découpes sans nuire à la structure de l'enceinte 4. Il peut par exemple s'agir de plaques métalliques placées sur les faces internes de la structure de l'enceinte et/ou de poutres dans les angles internes de l'enceinte 4.

L'enceinte 4 peut également comprendre au moins une porte d'accès 18 à l'intérieure du système de découpe 2 (deux sur les figures). A l'instar de la structure de l'enceinte 4, cette porte d'accès peut être renforcée, pour les mêmes raisons et avec les mêmes moyens que cette structure. L'enceinte 4 peut par exemple comprendre une porte d'accès d'origine, par exemple quand l'enceinte est un conteneur, la porte d'accès étant équipée de capteur de sécurité en cas d'ouverture de cette dernière.

L'enceinte 4 peut comprendre au moins une fenêtre 28 munie de moyens d'obstruction configurés pour laisser passer la lumière. La présence de fenêtre 28 permet de garder une certaine visibilité sur la zone de travail tout en garantissant une certaine sécurité grâce à la présence de moyens d'obstruction permettant le passage de lumière. Ces moyens d'obstruction peuvent être formés par un grillage, une fenêtre, une plaque transparente, etc.

Un des avantages du système de découpe 2 selon l'invention réside dans le fait de rendre le plus accessibles possible les éléments ayant besoin de maintenance. A cet effet, l'enceinte 4 peut comprendre sur une de ses faces externes un socle 18 de fixation d'une armoire électrique 20. Poursuivant ce même objectif, il est possible que l'enceinte 4 comprenne sur une face externe au moins une platine d'accueil 22 des systèmes hydraulique et/ou pneumatique du robot de découpe 6. Tout cela permet d'accéder facilement à ces éléments, notamment pour la maintenance de l'ensemble. On peut également fixer sur l'extérieur de l'enceinte 4 une baie de contrôle 34 du robot de découpe 6.

De plus, et afin de respecter les normes de sécurité en matière d'exposition aux bruits, il est possible d'équiper l'enceinte, par exemple sur les faces internes de cette dernière, d'éléments d'isolation phonique. On peut citer des panneaux, par exemple en mousse, de laine de roche recouvert d'une tôle perforée, spécifiquement conçus pour une telle isolation ou tout autre moyen permettant une telle isolation.

Il est également possible que l'enceinte comprenne au moins un organe de raccordement du système de découpe à un moyen d'aspiration de gaz. Cela s'inscrit notamment dans le traitement des vapeurs de lubrification. Encore une fois, il s'agit ici de pouvoir mettre le robot de découpe en fonctionnement le plus rapidement possible en permettant de placer très rapidement l'ensemble dans des conditions de sécurité optimales. On peut alors envisager l'installation d'une aspiration chez l'utilisateur.

Après découpe des pièces métalliques, tous les produits de découpe sont acheminés hors de l'enceinte 4 (par un tapis roulant, par la mise en place d'un conduit incliné en sortie de zone de découpe, etc.). Ils peuvent être acheminés jusqu'à un convoyeur 24 attenant à l'enceinte 4. Ce dernier est configuré pour séparer pièces métalliques découpées des copeaux issus de la découpe.

Il peut par exemple s'agir d'un convoyeur comprenant, au niveau d'une partie dans la continuité de la sortie des produits de découpe de l'enceinte 4, une grille de séparation 36 s'étendant au-dessus d'un bac de réception 38 des copeaux issus de la découpe. Il peut s'agir d'une grille inclinée en direction d'un tapis roulant 40.

Ainsi, tous les produits issus de la découpe sont amenés jusqu'à la grille de séparation 36. Cette dernière est dimensionnée (i.e. écartement entre les barreaux) pour laisser passer les copeaux issus de la découpe qui tombent dans le bac de réception 38. Les pièces métalliques ne traversent pas la grille, glissent le long de cette dernière et atteignent le tapis roulant 40 du convoyeur 24 pour être collectés.

Afin d'améliorer l'ergonomie du système de découpe 2, de permettre un chargement du système de découpe en temps masqué et d'augmenter le nombre de découpes possibles, l'enceinte 4 peut comprendre une table de découpe 26 pivotante. Cela permet de se passer du fait d'utiliser plusieurs tables de découpe.

La table de découpe 26 est pivotante, de préférence d'une course angulaire de 0° à 180° à l'aide d'un moteur de la table de découpe 42, de préférence un moteur sans balai. La table de découpe 26 peut par exemple effectuer sa rotation en trois secondes.

Pour sécuriser la rotation de la table de découpe 26 en cas de chargement de cette dernière par un opérateur, on utilise un scrutateur laser pour détecter, en fonctionnement, l'entrée d'un opérateur dans une zone proche de la table de découpe 26 pour stopper le système de découpe 2. On notera par ailleurs la présence d'une zone d'accueil 30 devant la table de découpe 26 pour un opérateur.

La table de découpe 26 peut potentiellement pivoter entre une position verticale et une position horizontale et peut comprendre une goulotte attenante (et s'étendant le long d'au moins une face externe de l'enceinte 4) permettant l'acheminement de câbles électriques et hydrauliques.

De plus, et pour assurer le maintien et le positionnement des pièces à découper (et donc la répétabilité des découpes), la table de découpe 26 comprend des éléments de centrage et de maintien des pièces à découper. Il peut par exemple s'agir de brides hydrauliques 44 pour assurer le serrage, et donc le maintien en position des pièces à découper et de centreurs pneumatiques comprenant des ressorts (dont la dureté peut être variable et déterminée après des essais en condition réelles).

### Références numériques

- 2 :: système de découpe
- 4 :: enceinte
- 6 :: robot de découpe
- 8 :: bloc de sciage
- 10 :: scie
- 12 :: moteur
- 14 :: bras de robot
- 16 :: portes d'accès
- 18 :: socle
- 20 :: armoire électrique
- 22 :: platine d'accueil
- 24 :: convoyeur
- 26 :: table de découpe
- 28 :: fenêtre
- 30 :: zone d'accueil
- 32 :: axe monobloc
- 34 :: baie de contrôle du robot de découpe
- 36 :: grille de séparation
- 38 :: bac de réception
- 40 :: tapie roulant
- 42 :: moteur de la table de découpe

## Revendications

1. Système de découpe (2) de pièces métalliques, **caractérisé en ce qu'**il comprend au moins une enceinte (4) comprenant au moins un robot de découpe (6) des pièces métalliques, l'enceinte (4) étant agencée pour permettre le fonctionnement et le transport du robot de découpe (6) à l'intérieur de l'enceinte (4).

2. Système de découpe (2) selon la revendication 1, dans lequel l'enceinte (4) est un conteneur, de préférence de type maritime.

3. Système de découpe (2) selon l'une quelconque des revendications précédentes, dans lequel les pièces métalliques sont des masselottes.

4. Système de découpe (2) selon la revendication 1, dans lequel le robot de découpe (6) est agencé pour réaliser des découpes ou de l'usinage selon au moins six axes de coupe.

5. Système de découpe (2) selon l'une quelconque des revendications précédentes, dans lequel l'enceinte (4) comprend des éléments de renfort de sa structure.

6. Système de découpe (2) selon l'une quelconque des revendications précédentes, comprenant un dispositif de coupure du robot de découpe (6), le dispositif d'arrêt étant configuré pour arrêter le robot de découpe (6) si la force exercée par ce dernier lors d'une découpe excède une valeur seuil.

7. Système de découpe (2) selon l'une quelconque des revendications précédentes, dans lequel l'enceinte (4) comprend sur une face externe au moins un socle de fixation (18) d'une armoire électrique (20).

8. Système de découpe (2) selon l'une quelconque des revendications précédentes, dans lequel l'enceinte (4) comprend sur une face externe au moins une platine d'accueil (22) des systèmes hydraulique et/ou pneumatique du robot de découpe (6).

9. Système de découpe (2) selon l'une quelconque des revendications précédentes, dans lequel l'enceinte (4) comprend au moins une porte d'accès (16) à l'intérieur du système de découpe (2), la porte d'accès (16) comprenant des éléments de renfort de sa structure.

10. Système de découpe (2) selon l'une quelconque des revendications précédentes, dans lequel l'enceinte comprend des éléments d'isolation phonique de l'enceinte.

11. Système de découpe (2) selon l'une quelconque des revendications précédentes, dans lequel l'enceinte (4) comprend au moins une fenêtre (28) munie de moyens d'obstruction configurés pour laisser passer la lumière.

12. Système de découpe (2) selon l'une quelconque des revendications précédentes, dans lequel l'enceinte (4) comprend au moins un organe de raccordement du système de découpe (2) à un moyen d'aspiration de gaz.

13. Système de découpe (2) selon l'une quelconque des revendications précédentes, comprenant un convoyeur (24) attenant à l'enceinte (4) et configuré pour séparer les pièces métalliques découpées des copeaux issus de la découpe.

14. Système de découpe (2) selon l'une quelconque des revendications précédentes, dans lequel l'enceinte (4) comprend une table de découpe (26) pivotante.

15. Système de découpe (2) selon la revendication 14, dans lequel la table de découpe (26) comprend des éléments de centrage et de maintien des pièces à découper.
